# EUROPEAN PATENT APPLICATION

(11) **EP 2 999 162 A1**
(43) Date of publication of application: **23.03.2016**
(21) Application number: 14306441.8
(22) Date of filing: 18.09.2014
(51) Int. Cl.: H04L 12/24

(54) **Remote management of LAN devices by an Auto-Configuration Server**

(71) Applicant: ALCATEL LUCENT, 92100 Boulogne-Billancourt (FR)
(72) Inventor: Humble, Filip, 3000 Melbourne Victoria (AU); Erdem, Hande, 3000 Melbourne,Victoria (AU); Danisik, Bahadir, 34776 Istanbul (TR)
(74) Representative: Hylarides, Paul Jacques

(57) **Abstract**

The invention relates to a method for an Auto-Configuration Server (ACS) to associate a device in a Local Area Network (LAN device) to a gateway to which the LAN device is connected, wherein the ACS is connected to and/or comprises a database holding an association between unique identifying information of the gateway and an IP address of the gateway, comprises the ACS executing the following steps: receiving Internet Protocol (IP) based communication from the LAN device, said IP communication comprising a TR-069 inform message that includes unique identifying information of the LAN device; obtaining the unique identifying information of the LAN device from the inform message; obtaining the IP address of the gateway from the IP based communication;searching the database for the unique identifying information of the gateway corresponding to the obtained IP address; and, if unique identifying information of the gateway was found using the obtained IP address, updating the database to include an association between this unique identifying information of the gateway and the unique identifying information of the LAN device.

## Description

The present invention relates to a method for associating a LAN device and gateway to enable remote management.

The TR-069 protocol is a protocol for the remote management of user devices. Specifically, it is able to deal with the remote management of user devices that are connected in a Local Area Network, hereinafter referred to as LAN devices, via a gateway comprised in the LAN. The protocol is also sometimes referred to as the CPE WAN (Customer premises equipment wide-area network) management protocol. Under this protocol, an auto-configuration server (ACS) communicates with the gateway and LAN devices and can configure these devices. However, in the protocol, a session is always initiated by the gateway device or the LAN device, and cannot be initiated by the ACS itself.

LAN devices may include various different kinds of devices that support the TR-069 protocol. For example, and without limitation, the LAN devices can be set-top boxes, sip phones, personal computers, laptops, telephones, tablets, network printers, internet-equipped household appliances, etc. To allow remote management, the LAN device comprises preconfigured information allowing it to contact a predefined ACS. This information is normally provided during manufacturing of the LAN device. The preconfigured information may comprise the Uniform Resource Locator (URL) of the ACS.

The word gateway or gateway device as used herein is meant to cover all devices that provide a connection between a LAN device and a device external to the LAN. Examples of gateways, without limitation, are modems, bridges, routers, home networking adapters, phones and similar devices.

An ACS will, in general, maintain a database of gateways and LAN devices that it should perform remote management for. For gateways, this database may be populated in the following manner: when a gateway is booted, and possibly also when it undergoes a change, for instance when its IP address is change, it will initiate a TR-069 session, and it will send a TR-069 inform message, using the preconfigured information, to the ACS. This inform message comprises identifying information of the gateway. Typically, this information may include the name of the manufacturer name, an organizationally unique identifier (OUI), a product class, a serial number etc. This identifying information, taken together, is preferably unique to the gateway. The ACS stores this information in a database. The IP address may also be included in the TR-069 inform message, and may also be stored in the database. If it is not included in the inform message, the IP address, as well as other potentially relevant parameters, such as a MAC address, can be retrieved by the exchange of a getParameterValue message and a response thereto within the existing TR-069 session.

For various reasons, it may be useful for an ACS to be able to communicate with the LAN device. The ACS may for instance want to assess the quality of service for a particular service, and/of the ACS may need to be able to approach and manage the LAN devices. Specifically, for these and other purposes, the gateway should be configured in such a way that connection requests, usually taking the form of an empty HTTP Get message, sent to a certain port of the gateway, are routed to the LAN device such that the LAN device can be triggered into starting a TR-069 session. This procedure is often referred to as port mapping. It allows incoming traffic on a given port from devices external to the LAN, to be forwarded to a LAN device connected to the gateway. This latter communication may be performed using the internal IP address of the LAN device and a given port. For instance, the gateway may be set up to allow incoming traffic on a given port from the ACS, which has a given IP address, to be forwarded to the LAN device that is connected to the gateway on an internal port thereof. For instance, the port mapping may comprise the following association: (IP address ACS, port number; Internal IP address LAN device, port number).

If both the LAN device and the gateway support Annex F of the TR-069 protocol, the following method can be used to associate them. When the LAN device boots, it will communicate with the gateway to which it is connected using the Dynamic Host Configuration Protocol (DHCP), acquiring identifying information of the gateway, such as for example the name of its manufacturer name, an organizationally unique identifier (OUI), a product class, a serial number etc. It then sends out an TR-069 inform message including identifying information of the gateway as well as identifying information of the LAN device itself, such as for example the name of its manufacturer name, an organizationally unique identifier (OUI), a product class, a serial number etc., to the ACS. This inform message may also include a local IP address of the LAN device.

During the communication between the gateway and the LAN device using the DHCP, the gateway will also receive a message comprising the identifying information of the LAN device. It will store this information in a database comprising information of the LAN devices connected to the gateway. As an alternative option to the procedure described in the previous paragraph, an ACS may be capable of reading the information directly from this gateway database. The ACS may optionally employ both methods and crosscheck the two associations to ensure their validity.

Once the ACS receives information about which gateway a LAN device is associated with, the ACS may store this association. This association is then used to configure the gateway to set up the abovementioned port mapping to allow the ACS to perform remote management on the LAN device via the gateway. Also, once the association is determined, the ACS can use the HTTP protocol to prompt the LAN device to start a new TR-069 session, which, as stated before, it cannot do itself.

In practice not all LAN devices support Annex F. As such, these devices can nowadays not be remotely managed.

It is therefore an object of the invention to provide a method for an ACS to remotely manage a LAN device which does not support Annex F.

This object may be achieved by the method described in claim 1.

A method, according to the invention, for an Auto-Configuration Server (ACS) to associate a device in a Local Area Network (LAN device) to a gateway to which the LAN device is connected, wherein the ACS is connected to and/or comprises a database holding an association between unique identifying information of the gateway and an IP address of the gateway, comprises the ACS executing the following steps: receiving Internet Protocol (IP) based communication from the LAN device, said IP communication comprising a TR-069 inform message that includes unique identifying information of the LAN device; obtaining the unique identifying information of the LAN device from the inform message; obtaining the IP address of the gateway from the IP based communication; searching the database for the unique identifying information of the gateway associated with the obtained IP address; and, if unique identifying information of the gateway was found using the obtained IP address, updating the database to include an association between this unique identifying information of the gateway and the unique identifying information of the LAN device.

LAN devices which support the TR-069 protocol are configured to periodically send out a TR-069 inform message to a designated ACS. The period may vary from a short period of, for instance, 5 minutes to much longer periods of, for instance, 24 hours. The TR-069 inform message may also be sent to the ACS when the LAN device is being booted. This TR-069 inform message may comprise identifying information of the LAN device, as well as the local IP, which is the IP address within the LAN. If the LAN device supports Annex F, the inform message may also comprise information about the associated gateway. However, the currently proposed method applies to LAN devices which do not support Annex F, or if for some reason bypassing Annex F may be desirable.

First, according to the invention, the IP based communication comprising the TR-069 inform message is received. Then, from this TR-069 inform message, the identifying information of the LAN device contained therein is obtained.

At this point, if the LAN device supports Annex F, the ACS will also find identifying information of the gateway in the inform message, and use this identifying information to add the association between the LAN device and the gateway to the database. However, if the LAN device does not support Annex F, the locations in the inform message dedicated to identifying information of the gateway will be empty, or return a null value.

In the present invention, the ACS then obtains the IP address of the gateway from the IP based communication. The IP based communication is sent via the gateway, and may therefore comprise the IP address of the gateway through which it was sent.

Once the IP address has been obtained, the ACS may then search its database for this IP address. If it finds the IP address, identifying information of the gateway will usually be found as well. The ACS may thus deduce the identifying information of the gateway associated to the LAN device. It may then update the database to include the deduced association between gateway and LAN device.

The ACS may store the obtained unique identifying information of the LAN device in the database.

The identifying information of the LAN device may be useful in configuring port mapping on the gateway. It may also be relevant for the remote management of the LAN device by the ACS. The ACS therefore maintains a device database comprising identifying information of both LAN devices and gateway devices. Further information may also be included: examples could be the version number of the device, the hardware status, the software on the device, etc.

The ACS may obtain the local IP address of the LAN device, preferably from a connection request comprised in the received IP based communication, and may store the obtained IP address of the LAN device in the database.

The local IP address cannot be used to directly communicate to the LAN device, as it is not globally unique. However, the local IP address is unique within the LAN itself, and therefore can be used in port mapping.

A TR-069 inform message may comprise a connection request which will comprise the local IP address of the LAN device. The local IP address of the LAN device could potentially also be obtained from other IP based communication originating from the LAN device.

The unique identifying information of the LAN device may comprise at least one of the group consisting of a manufacturer name, an organizationally unique identifier (OUI), a product class, and a serial number.

Under the TR-069 protocol, the identifying information typically comprises the manufacturer name, or an accepted shorthand or code for the manufacturer, the organizationally unique identifier (OUI), a product class, and a serial number. However, any combination of identifiers which identifies the device in a unique way, preferably a globally unique way, is in principle a possibility.

The unique identifying information of the gateway may comprise at least one of the group consisting of a manufacturer name, an organizationally unique identifier (OUI), a product class, and a serial number

Under the TR-069 protocol, the identifying information typically comprises the manufacturer name, or an accepted shorthand or code for the manufacturer, the organizationally unique identifier (OUI), a product class, and a serial number. However, any combination of identifiers which identifies the device in a unique way, preferably a globally unique way, is in principle a possibility.

The IP address may be obtained from a header of an equal or underlying lower level communication layer associated with the TR-069 protocol.

The IP address may be obtained from a header corresponding to the IP protocol.

In some cases, the IP address is easy to identify, as messages in sent in the Internet Protocol (IP) in general tend to include the IP address of the sender. When the IP based communication comprising the TR-069 inform message "passes through" the gateway, the IP address of the gateway will be placed in the IP header of the IP based communication. The ACS can then obtain the IP address of the gateway from this IP header.

In a different embodiment, the IP address is obtained from a HTTP protocol header, preferably from the X-FORWARDED-FOR HTTP header field.

For security reasons, many ACSs are associated with a reverse proxy server. In this case, IP based communications from the LAN device and the gateway device are not addressed directly at the ACS, but indirectly. They will be sent to the reverse proxy server, which then sends them on to the ACS. This allows the IP address of the ACS itself to remain confidential, as well as providing other security benefits.

A drawback of the presence of a reverse proxy server is that the sender's IP address of all messages arriving at the ACS will be the IP address of the reverse proxy server. Hence, the method as outlined for the previous embodiment will not yield the desired IP address.

However, reverse proxy servers do not discard the original sender's IP address. Instead, the de facto standard is to conserve past IP addresses in a HTTP header field, specifically the X-FORWARDED-FOR HTTP header field of the IP based communication comprising the TR-069 inform message.

The general form of this field is X-Forwarded-For: client, proxy1, proxy 2, wherein the left-most value is the IP address of the original client, i.e. in this case the IP address of the gateway device. Hence, even if a reverse proxy server is present, the IP address of the gateway through which the inform message was sent, can generally be obtained from the IP based communication comprising the TR-069 inform message.

The ACS may use the IP address of the gateway and the local IP address of the LAN device to set up port mapping on the gateway.

The exact procedure for setting up port mapping is well-established and will be known to the person skilled in the art. In general terms, the gateway will typically be configured to automatically send connection requests received from the ACS on a certain port to the LAN device. More specifically, it will forward the connection requests to a certain pre-configured port of the LAN device. For port-mapping, the ACS requires both the IP address of the gateway and the local IP address of the LAN device within the LAN, as well as potentially further information about the gateway and/or the LAN device.

The steps of the method may be preceded by the following step: the LAN device sending an IP based communication comprising a TR-069 inform message to the preconfigured ACS.

LAN devices are preconfigured to send an IP based communication comprising a TR-069 inform message comprising identifying information of the LAN device, both upon booting and periodically afterwards, to a preconfigured ACS. For this purpose, the LAN device is provided with preconfigured information allowing it to contact a predefined ACS. The preconfigured information may comprise the Uniform Resource Locator (URL) of the ACS.

The steps of the method may be preceded by the following steps: the gateway sending an IP based communication comprising a TR-069 inform message to the ACS, the ACS obtaining unique identifying information of the gateway from the TR-069 inform message, and the ACS populating a gateway entry in the database comprising the identifying information.

Similarly to the LAN device, the gateway is also preconfigured to send an IP based communication comprising a TR-069 inform message comprising identifying information of the gateway, both upon booting and periodically afterwards, to a preconfigured ACS. For this purpose, the gateway is provided with preconfigured information allowing it to contact a predefined ACS. The preconfigured information may comprise the Uniform Resource Locator (URL) of the ACS.

The ACS may obtain the identifying information of the gateway comprised in the TR-069 inform message comprised in the IP based communication, and store it in the database.

The method may further comprise the following steps: the ACS sending a GetParameterValue TR-069 message to the gateway requesting its IP address, the gateway responding with a ParameterResponse TR-069 message comprising its IP address, the ACS obtaining the IP address and storing the obtained IP address in the gateway entry of the database.

This exchange of TR-069 messages allows the ACS to add information about the IP address of the gateway to the entry of the gateway in the database. This information is necessary to later set up port mapping on the gateway. It may also be useful for remotely managing the gateway.

Updating the database to include an association between the LAN device and the gateway may comprise including in the database entry of the LAN device information that points towards the database entry of the gateway.

An efficient way to store the association may be to store a pointer to the database entry for the gateway device in the database entry for the LAN device. This way, even if the IP address or other important attributes of the gateway device changes, the LAN device entry will not need to be updated. However, other possibilities for storing the association will be clear to the person skilled in the art.

According to a further aspect of the present invention, an auto-configuration server configured to execute the method as defined above is provided.

This ACS may be connected to and/or comprises the database as described above.

According to a further aspect of the present invention, a non-transient computer readable medium is provided containing program instructions for causing a computer to perform the method as described above.

The invention will be further illustrated referring to the appended figures, wherein
- Fig. 1a depicts the situation without a reverse proxy;
- Fig. 1b depicts the situation with a reverse proxy;
- Fig. 2 illustrates the process of populating a gateway device entry in the ACS device database;
- Fig. 3 illustrates the process of associating a LAN device and its gateway in the prior art, i.e. using Annex F;

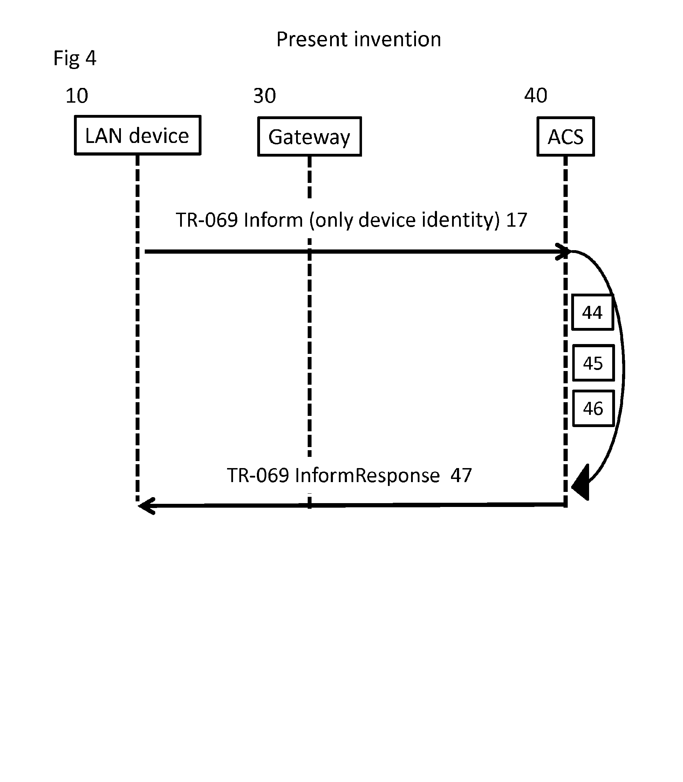

- Fig. 4 illustrates the method according to the present invention.

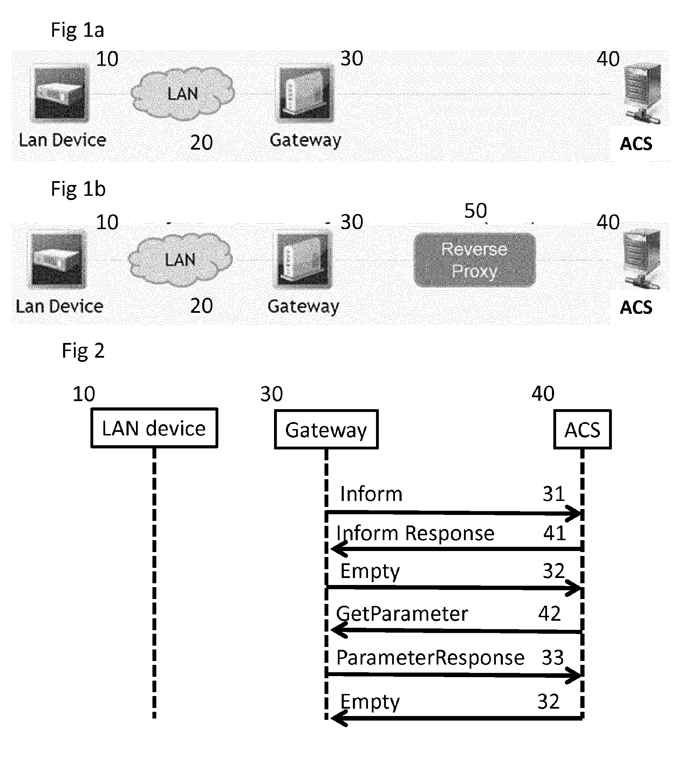

In figure 1a, three main devices are connected: a LAN device 10 is connected through a LAN 20 to a gateway 30, to which many other LAN devices 10', 10" etc. may also be connected through the same LAN 20. The gateway in turn is connected to an ACS 40. Any IP based communication sent directly from the gateway 30 to the ACS 40 will have the gateway's IP address as the IP address of the sender, and the ACS can obtain this IP address, from the IP header.

Figure 1b depicts a somewhat different situation, in which a reverse proxy 50 is present between the gateway 30 and the ACS 40. The gateway 30 will be configured to send IP based communications to the reverse proxy 50 and not directly to the ACS 40. The reverse proxy 50 will send on IP based communications it receives to the ACS 40. As a result, the sender's IP address of all the IP based communications received by the ACS 40 will be the IP address of the reverse proxy 50 and not the IP address of the gateway 30, which is the desired IP address.

However, the reverse proxy 50 will put the IP address of the gateway 30 in a field of the IP based communication, usually the X-FORWARDED-FOR HTTP header field, and the ACS 40 will be able to obtain the IP address from that field.

Figure 2 depicts the process of either making or updating a gateway entry in the ACS device database according to the TR-069 protocol. The process only involves communication between the gateway 30 and the ACS 40, and it is generally assumed to have taken place first, before the LAN device 10 is connected to the LAN 20. However, this need not be the case, and the present invention is not limited to the case in which the gateway is connected first.

When the gateway device 30 is booted, it will send an IP based communication comprising a TR-069 inform message 31 to the ACS 40. This TR-069 inform message 31 will generally comprise unique identifying information of the gateway 30, usually a manufacturer name, an organizationally unique identifier (OUI), a product class and a serial number. It may also include additional information. The ACS 40 replies to this inform message 31 with an IP based communication comprising a TR-069 inform response message 41 which acknowledges the receipt of the IP based communication comprising the TR-069 inform message. The gateway 30 proceeds to send an empty message 32. If the ACS 40 responds to this with an empty message as well, the session will end. However, it may be useful for the ACS 40 to get more information about the gateway 30 first. It therefore sends an IP based communication comprising a TR-069 GetParameterValue message 42 which lists the parameters of the gateway 30 of which it would like to be informed. The gateway responds with an IP based communication comprising a TR-069 ParameterResponse message 33, which includes the asked for parameters. Notably, one of these parameters may be, and often is, the IP address of the gateway 30, though this IP address may also have been included in the original TR-069 inform message. The ACS 40 proceeds to send an empty message 43, ending the TR-069 session.

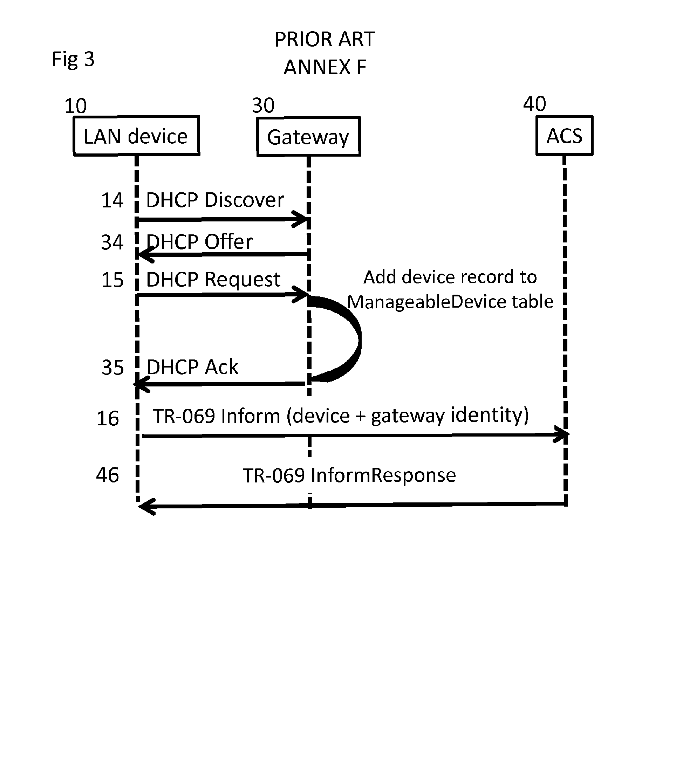

When a LAN device 10 supporting Annex F boots and connects to the LAN 20, the process depicted in figure 3 will take place. First, the LAN device 10 will send a DHCP discover message 14 to the gateway 30, where this message contains identifying information of the LAN device 10. Under the TR-069 protocol, this identifying information will usually be a manufacturer name, an organizationally unique identifier (OUI), a product class and a serial number, but other combinations yielding a preferably globally unique identifier are also possible. Additional information may also be included.

The gateway 30 responds with a DHCP offer message 34, which comprises similar identifying information of the gateway 30. Again, under the TR-069 protocol, this identifying information will usually be a manufacturer name, an organizationally unique identifier (OUI), a product class and a serial number, but other combinations yielding a preferably globally unique identifier are also possible. Additional information may also be included.

A further exchange takes place, consisting of a DHCP Request 15 from the LAN device 10 to the gateway and a DHCP Acknowledgement 35 from the gateway 30 to the LAN device in response. This exchange leads to a device record for the LAN device 10 being added to a ManageableDevice table on the gateway 30.

The LAN device 10 now has all the necessary information to send an IP based communication comprising a TR-069 inform message 16 to the ACS 40 comprising identifying information of both the LAN device 10 itself and of the gateway 30. The ACS 40 responds with an Inform Response message 46, and may store the information about the LAN device 10 and the associated gateway 30 in a database. More information can be found in Amendment 2 of the TR-069 protocol, from which figure 3 was adapted.

If the LAN device 10 does not support Annex F, it will not exchange DHCP messages with the gateway 30. It will send an IP based communication comprising a TR-069 inform message 17 to the ACS 40, but this inform message will contain only identifying information of the LAN device 10 itself. It does not have, and therefore cannot include, identifying information of the gateway 30.

The ACS 40 detects 44 that the gateway information is missing. It then obtains 45 the IP address from the message, either from its IP header or, if a reverse proxy 50 is present between the gateway 30 and the ACS 40, from a lower or equal level communication layer, usually more specifically from X-FORWARDED-FOR HTTP header field of the IP based communication. It will then search 46 its database to find the gateway 30 associated with the obtained IP address, and thus also to find the identifying information of the gateway 30.

The ACS 40 will also respond to the inform message 17 with an inform response 47. Further messages may be exchanged until the session is closed. The ACS 40 may also, now that it has deduced which gateway 30 the LAN device 10 is associated with, configure the gateway 30 for port-mapping, making sure that a connection request sent to a certain port of the gateway 30 will be sent on to a certain port of the LAN device 10.

Many possible alternatives to elements described above will be clear to the person skilled in the art. The skilled person will also appreciate that the figures above describe just one example of how the method may be applied, and that the invention is not limited to this narrow example. Names of messages are defined in the protocols used, and may be different for a different protocol. The skilled person will also be capable of adapting the method to changing standards and protocols.

## Claims

1. A method for an Auto-Configuration Server (ACS) to associate a device in a Local Area Network (LAN device) to a gateway to which the LAN device is connected, the ACS being connected to and/or comprising a database holding an association between unique identifying information of the gateway and an IP address of the gateway, wherein the method comprises the ACS executing the following steps:
receiving Internet Protocol (IP) based communication from the LAN device, said IP communication comprising a TR-069 inform message that includes unique identifying information of the LAN device;
obtaining the unique identifying information of the LAN device from the inform message;
obtaining the IP address of the gateway from the IP based communication;
searching the database for the unique identifying information of the gateway associated with the obtained IP address; and
if unique identifying information of the gateway was found using the obtained IP address, updating the database to include an association between this unique identifying information of the gateway and the unique identifying information of the LAN device.

2. The method according to claim 1, wherein the ACS stores the obtained unique identifying information of the LAN device in the database.

3. The method according to one of the previous claims, wherein the ACS obtains the local IP address of the LAN device, preferably from a connection request comprised in the received IP based communication, and stores the obtained IP address of the LAN device in the database.

4. The method according to one of the previous claims, wherein the unique identifying information of the LAN device comprises at least one of the group consisting of a manufacturer name, an organizationally unique identifier (OUI), a product class, and a serial number.

5. The method according to one of the previous claims, wherein the unique identifying information of the gateway comprises at least one of the group consisting of a manufacturer name, an organizationally unique identifier (OUI), a product class, and a serial number.

6. The method according to one of the previous claims, wherein the IP address is obtained from a header of an equal or underlying lower level communication layer associated with the TR-069 protocol.

7. The method according to one of the previous claims, wherein the IP address is obtained from a header corresponding to the IP protocol.

8. The method according to one of the claims 1-6, wherein the IP address is obtained from a HTTP protocol header, preferably from the X-FORWARDED-FOR HTTP header field.

9. The method according to one of the previous claims, wherein the ACS uses the IP address of the gateway and the local IP address of the LAN device to set up port mapping on the gateway.

10. The method according to one of the previous claims, wherein the steps are preceded by the following step: the LAN device sending an IP based communication comprising a TR-069 inform message to the preconfigured ACS

11. The method according to one of the previous claims, wherein the steps are preceded by the following steps: the gateway sending an IP based communication comprising a TR-069 inform message to the ACS, the ACS obtaining unique identifying information of the gateway from the TR-069 inform message, and the ACS populating a gateway entry in the database comprising the identifying information.

12. The method according to claim 11, further comprising the following steps: the ACS sending a GetParameterValue TR-069 message to the gateway requesting its IP address, the gateway responding with a ParameterResponse TR-069 message comprising its IP address, the ACS obtaining the IP address and storing the obtained IP address in the gateway entry of the database.

13. The method according to one of the previous claims, wherein updating the database to include an association between the LAN device and the gateway comprises including in the database entry of the LAN device information that points towards the database entry of the gateway.

14. An auto-configuration server (ACS) configured to execute the method according to one of the previous claims.

15. The ACS according to claim 14, said ACS being connected to and/or comprising a database as defined in any of the claims 1-13.

16. A non-transient computer readable medium containing program instructions for causing a computer to perform the method according to one of the claims 1-13.
